# EUROPEAN PATENT SPECIFICATION

(11) **EP 3 281 892 B1**
(45) Date of publication and mention of the grant of the patent: **11.11.2020**
(21) Application number: 17183244.7
(22) Date of filing: 26.07.2017
(51) Int. Cl.: B65G 47/86

(54) **SYSTEM FOR HANDLING ARTICLES**
SYSTEM ZUR HANDHABUNG VON ARTIKELN
SYSTÈME DE MANIPULATION D'ARTICLES

(30) Priority: 10.08.2016 IT 201600084100
(43) Date of publication of application: 14.02.2018
(73) Proprietor: Cosmopack S.r.l., 41100 Modena (IT)
(72) Inventor: CAMPAGNOLI, Roberto, 40134 Bologna (IT)
(74) Representative: Gustorf, Gerhard

(56) References cited:
- EP-A1- 1 246 767
- EP-A1- 2 785 598
- EP-A2- 1 486 439
- US-A1- 2011 186 405

## Description

### Field of the Invention

The present invention relates to a system for handling and distributing articles particularly suitable for packaging lines of articles such as cans, jars and the like articles.

### Background of the Invention

With reference to EP 1.125.872 it is known a conveyor-distributor system with gripping heads, wherein said system distributes containers arriving from one single row into two or more rows.

With reference to EP 1.486.439, which discloses a system for handling articles according to the preamble of claim 1, it is known a conveyor system that horizontally translates articles and orients said articles during said translation.

Similar systems are known from documents US 2011/186.405.A1, EP 1.246.767.A1, EP 2.785.598.

These known systems solve their functions very well but have a number of disadvantages.

A first drawback is due to the fact that in order to selectively rotate the containers, and in order to sort the containers from a single row into two or more rows, two separate equipments must be used and, more particularly, from upstream to downstream, a first apparatus is used for selectively orientating the containers, i.e. a first apparatus of the type described in EP 1.486.439 and a second apparatus for placing in containers from a first row in two or more second rows, as for instance an apparatus of the type described in EP 1.125.872.

### Object of the Invention

The object of the present invention is to solve the above mentioned drawbacks. This objective is solved by a system for handling articles according to claim 1.

### Brief description of the drawings

Further caracteristics and advantages of the present invention will become more apparent from the following description of a preferred embodiment thereof, here given merely by way of non-limiting example and with reference to the attached drawings in which:
Figure 1 is a schematic top view of the system of the present invention in which two portions 1A and 1B are defined by a line L1;
Figures 1A and 1B, side by side with respect to the junction line L1, illustrate in an enlarged form the illustration of Figure 1;
Figure 2 is a schematic lateral view of the system of the present invention;
Figure 3 is a view of a handling group;
FIG. 4 is a schematic sectional view from behind the manipulating assembly of FIG. 3 in a first operational configuration;
FIG. 5 is a top view of the handling assembly of FIG. 3;

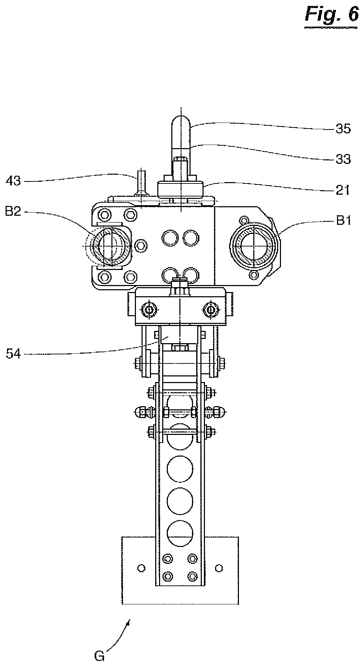

Figure 6 is a side view from right to left of the handling group of fig. 3;

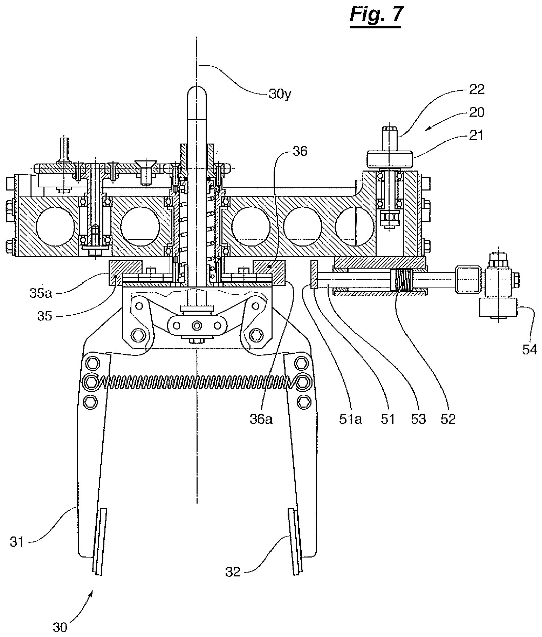

Figure 7 is a schematic sectional view from behind the manipulating assembly of Fig. 3 in a second operational configuration,

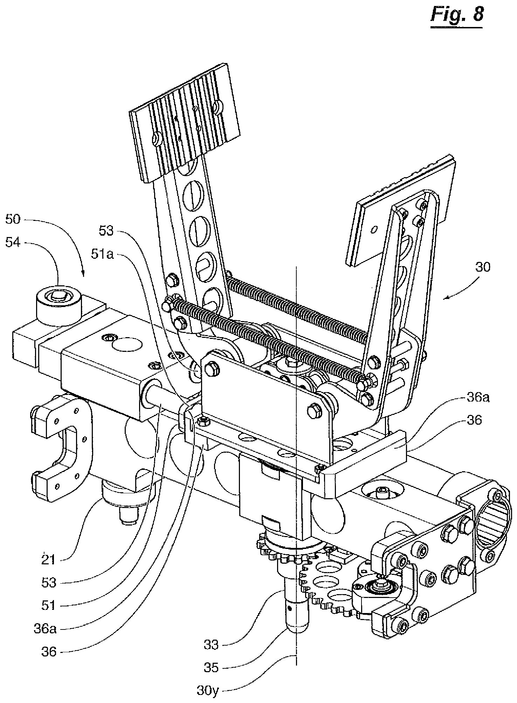

Figure 8 is a schematic view from below of the manipulating assembly of FIG. 3.

### Description the the Preferred Embodiment

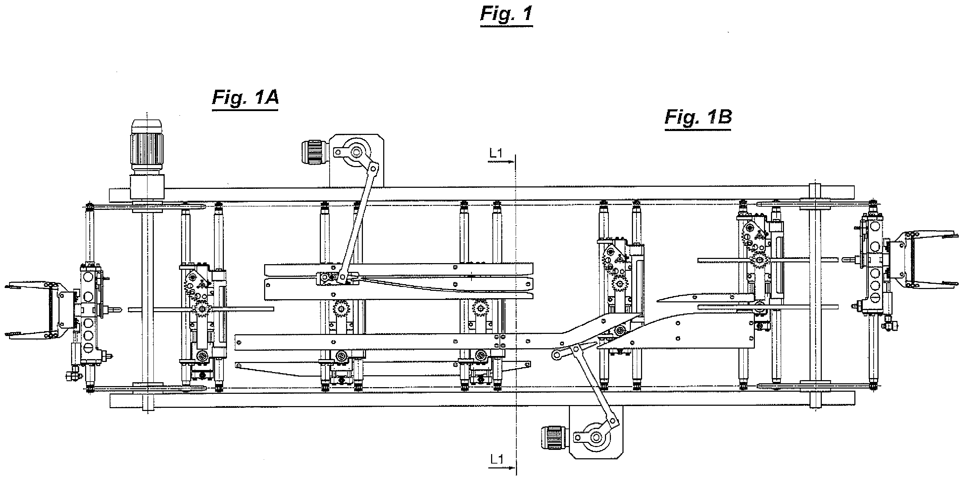

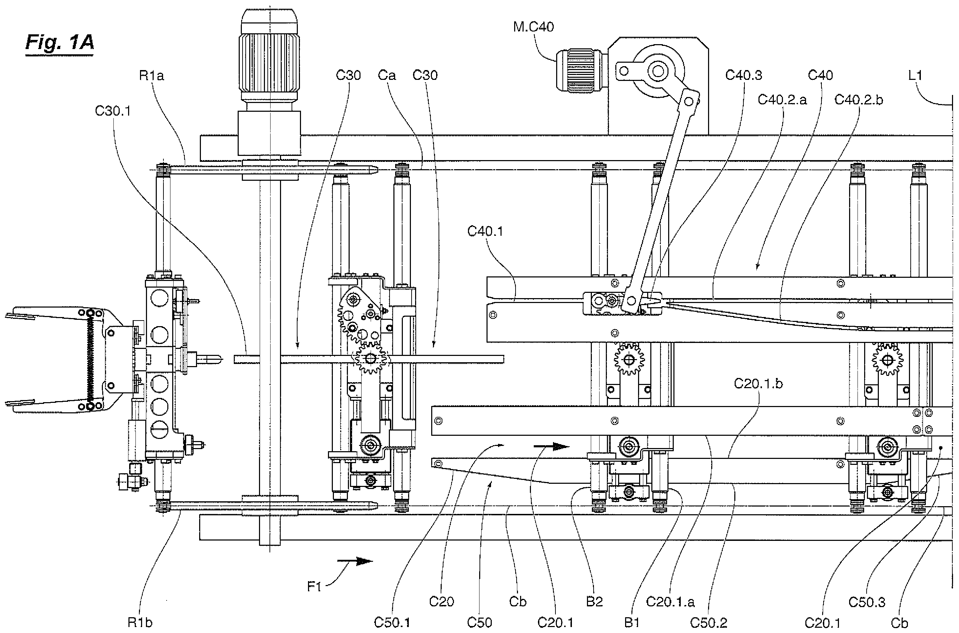

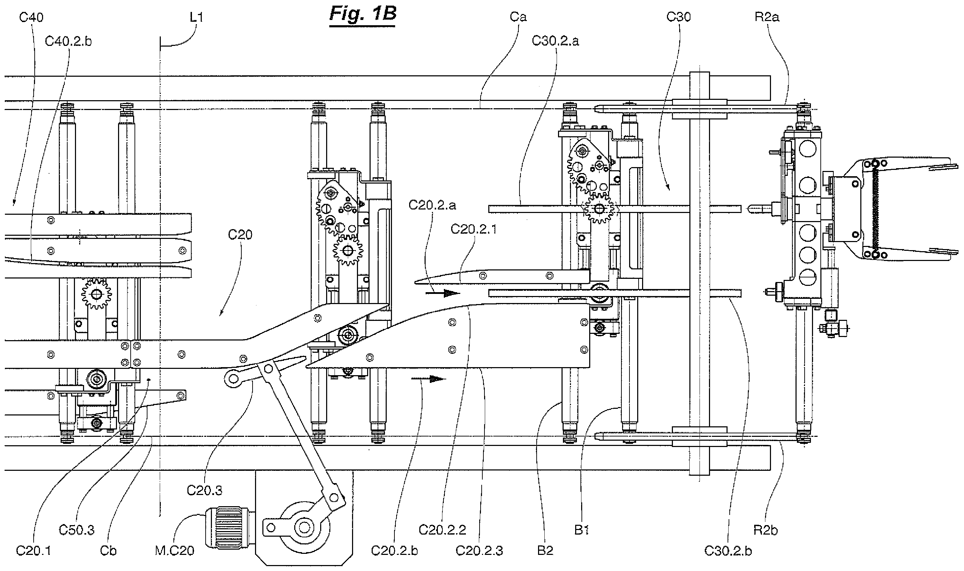

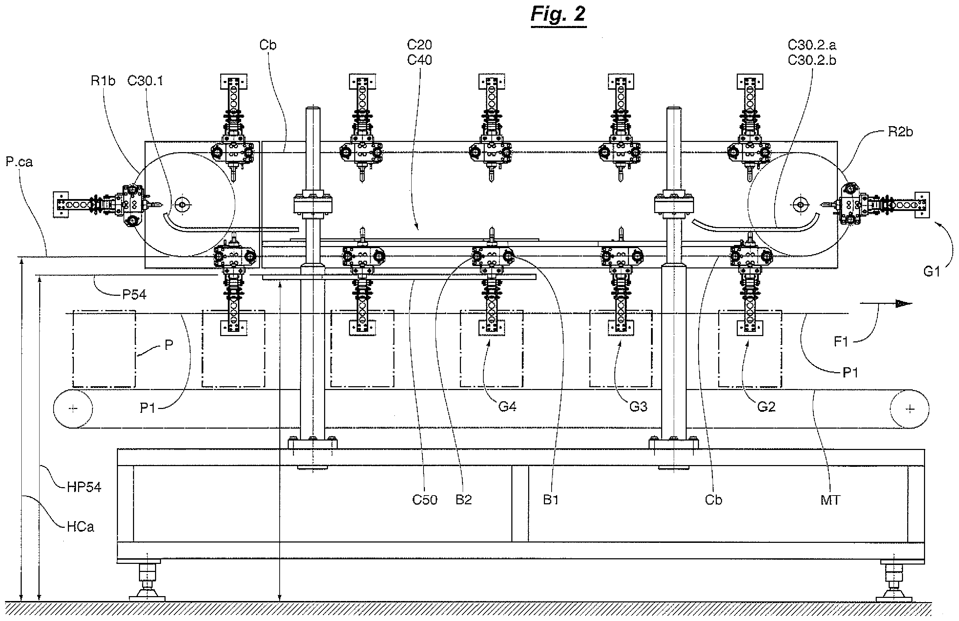

With reference to Figures 1A, 1B and 2, the system of the present invention comprises a pair of chains **C.a** and **C.b,** in which each chain **C.a** and **C.b** is wound in closed loop on respective pairs of toothed sprockets **R1a, R2a** and **R1b, R2b,** wherein said chains **Ca** and **Ca** support and move a plurality of pairs of support bars **B1, B2.**

Each pair of support bars **B1, B2** supports and moves a respective handling group **G1, G2, G3** etc. along a closed orbital path, and more particularly, along a operative path **P1** having direction **F1** corresponding to the lower branch of said orbital path defined by the chains **Ca** and **Cb.**

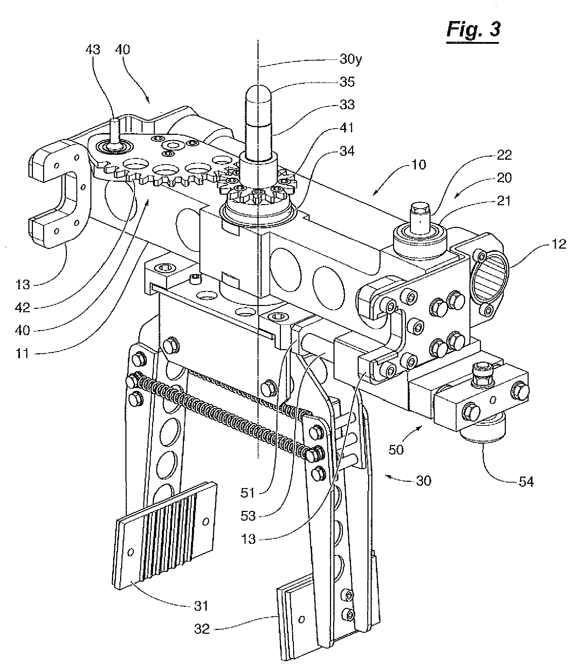

With reference to fig. 3, each handling group **G** comprises operative means **10, 20, 30, 40,** and **50,** better described below, wherein said operating means during the translation of each handling group **G** along the operating path **P1** are conducted to cooperate with drive means **C20, C30, C40, C50,** better described below, wherein said drive means are positioned along the operating path **P1.**

With reference to Figure 2, in the area underlying the operating path **P1** transport means **MT** are provided, which are capable of advancing the products **P** from upstream or downstream, such as, for example, a continuous or partial transport belt, wherein said means are capable of feeding articles from upstream towards downstream and at least near the beginning of said operating path **P1,** as well as able to pick articles near the downstream portion of the handling path **P1.**

Furthermore, with reference to Figure 3, each handling group **G** comprises:
- support means **10;**
- positioning means **20;**
- gripping/releasing means **30;**
- rotating/non-rotating means **40**
- locking/unlocking means **50.**

With reference to the support means 10, they essentially comprise a chassis **11** provided with coupling means **12** and **13,** such as an anterior sleeve **12** which joins in a sliding manner with the bar **B1,** and a pair of rear "U" shaped elements **13** used for joining the bar **B2** in a sliding manner, in order to support and transport each group **G** along said orbital path defined by the chains **Ca** and **Cb** and more particularly along said operating path **P1** as shown in FIG. 2.

With reference to positioning means 20 they are supported by said support means **10.** The positioning means **20** are adapted to move and define the transverse position for said support means **10** and hence for the handling group **G** during the translation of said handling groups **G** along the aforementioned operating path **P1** as best described below.

More particularly said positioning means **20** comprise a roller **21** which is rotatably supported by means of a pin **22,** which is vertically supported by the chassis **11** of the support means **10,** wherein said roller **21** is positioned below with respect to the free end of the pin **22** defining a free end pin portion **22.**

With reference to the gripping means **30** they can be known means, such as for example gripping/releasing means as described in EP 1.486.439.

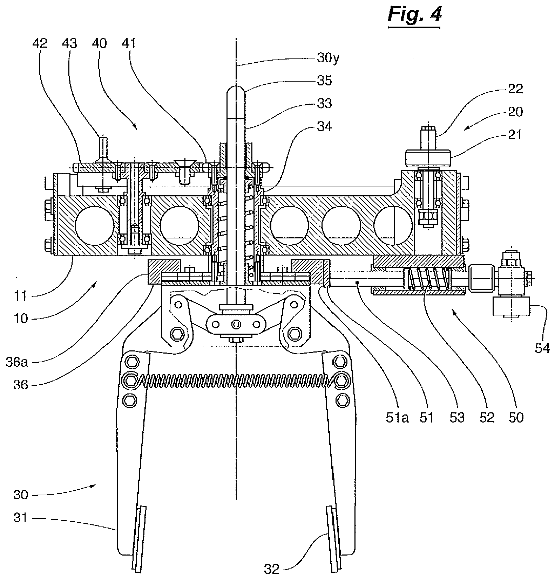

Said gripping/releasing means **30,** see also fig. 4, are rotatably supported by said support means **10** and, briefly, they comprise a pair of jaws **31** and **32,** a rod **33** as command tappet for opening the jaws with a relative head **35** and a support sleeve **34,** in which this latter forms a rotoidal coupling between said gripping means **30** and the support means **10,** in order to rotate said gripping/releasing means with respect to the axis **30y.**

With reference to rotating/non-rotating means 40, they may be known means as described in EP 1.486.439.

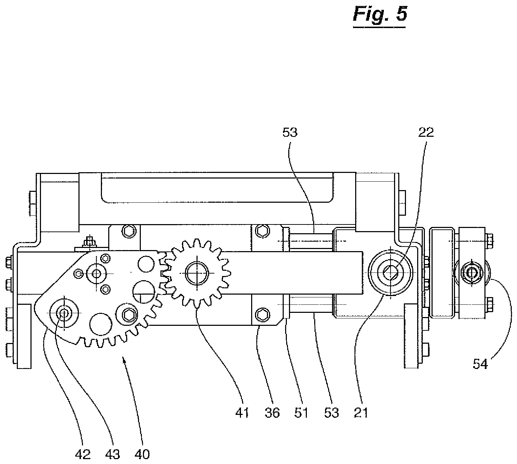

Rotating/non-rotating means **40,** see also fig. 5, are supported by said support means **10** and, briefly, they comprise a pinion **41** keyed on the tube **34,** a toothed sector **42,** and a control pin **43.**

With reference to the locking/unlocking means **50,** they are supported by said support means **10** and they are capable of locking/inhibiting or unlocking/allowing rotation of the gripping/releasing means **30.**

More particularly, said locking/unlocking means **50** comprise a pad **51** having a striker flat-face **51a,** wherein said I pad **51** is carried radially movable with respect to the rotation axis **30y** of the gripping means **30,** wherein said pad **51** is elastically pressed with its flat face **51a** against the flat face **36a** of a stop element **36** secured to the gripping/releasing means **30.**

The pad **51** is pressed against the stop element **36** by means of a spring **52,** in which said spring **52** is mounted on a control rod **53,** in which said rod **53** is supported axially by means of said chassis **11,** in which said rod **53** brings to its first end said pad **51** and to its opposite end a follower roller **54.**

Said locking/unlocking means **50** are positioned in an area below with respect to the support means 10, i.e. in the underlying area of the chassis **11** and, therefore, during the translation of the handling group **G** along the operating path **P1**, said follower roller **54** moves along a path **P54** positioned at a height **HP54** lower with respect to the height **HCa** in which the chains **Ca** and **Cb** move, i.e. said follower roller **54** moves in an operating environment that does not interfere with the operative enviroment in which the chains **Ca** and **Cb** move and does not interfere with the operating environment in which the other operating means **20, 30** and **40** move.

Preferably, a pair of rods **53** and a pair of springs **52** are provided for each I pad **51.**

With reference to the first drive means **C20** they are known type devices as described in EP 1.486.439**.**

Said first drive means **C20** are positioned along said operating path **P1** at a height higher than that in which the chains **Ca** and **Cb** move and said first drive means **C20** are able to cooperate with said positioning means **20.**

More particularly, said first drive means **C20,** from upstream to downstream, comprise a first track, **C20.1,** defined by profiles **C20.1.a** and **C20.1.b,** and two second tracks, **C20.2.a** (deviated) and **C.20.2.b** (not deviated), defined by profiles **C20.2.a** and **C20.2.b.b,** in which the rollers **21** are able to more along said two tracks **C20.2.a** and **C.20.2.b.b,** in which between said first track **C20.1** and said second tracks **C20.2.a** e **C20.2.b** a needle deflector **C20.3** is located, which has a U-shaped form in which the top of the pin **22** can slide. Said needle deflector **C20.3** can be actuated in two different positions by means of a crank mechanism controlled by a brushless motor **M.C20** connected to the control unit not shown.

The second drive means **C30** are positioned along said operating path **P1** on a height higher than that in which the chains **Ca** and **Cb** move and are operable to cooperate with said gripping/releasing means **30.**

More particularly said second drive means **C30** along the starting portion of the operating path **P1** comprise a first cam **C30.1** and along the terminal portion of the operating path **P1** comprise two second longitudinal profile cams **C30.2.a** and **C30.2.b,** wherein said second cams **C30.2.a** and **C30.2.b** are side by side and transversely spaced apart.

With reference to the third **C40** drive means they are known type devices as described in EP 1.486.439.

Said third drive means **C40** are positioned along said operating path **P1** at a height higher than that in which the chains **Ca** and **Cb** move and are able to cooperate with said rotating/non-rotating means **40.**

More particularly, said third drive means **C40,** from upstream to downsream, comprise a first track **C40.1** and two second tracks **C40.2**.a (not-diverted) and **C.40.2.b** (diverted), wherein between said first track **C40.1** and said second tracks **C40.2.a** and **C40.2.b** a needle deflector **C40.3** is placed, in which within said needle deflector **C40.3** the top of pivot **43** can slide. Said needle deflector **C40.3** can be actuated in two distinct positions by means of a crank mechanism controlled by a brushless motor **M.C40** connected to the control unit not shown. The fourth drive means **C50** are positioned along said operating path **P1** at a height **HP54** lower than the height **HCa** along wich the chains **Ca** and **Cb** move. Said fourth drive means **C50** are able to cooperate with said locking/unlocking means **50.**

With reference to the system above described, during the translation movement of the handling group **G** from upstream to downstream and along the operating path **P1**, the following operations are performed:
**a)** opening of the jaws **31, 32** of the gripping/releasing means **30** by cooperation between the gripping/releasing means **30** and the second drive means **C.30;**
**b)** positioning/moving transversely of the supporting means **10** with the jaws **31, 32** in the open position on the top of an article to be handled by means of cooperation between the positioning means **20** and the first drive means **C20;**
**c)** closing of the jaws **31, 32** of the gripping/releasing means **30** with consequent grasping of the article to be handled by means of cooperation between the gripping/releasing means **30** and the second drive means C30;
**d)** unlocking of the rotation for gripping/releasing means **30** by cooperation between the locking/unlocking means **50** and the fourth drive means **C50**;
**e)** maintaining unlocked the rotation for gripping/releasing **30** by means of a cooperation between the locking/unlocking means **50** and the fourth drive means **C50,** see roller 54 and track **C50.2;** and rotating or non-rotating of the gripping/releasing means **30** by the cooperation between the rotating/non-rotating means **40** and third drive means **C40,** more in particular by means of the pin **43** and the tracks **C40.2.a** and **C40.2.b;**
**f)** locking of the rotation of the gripping/releasing means **30** by cooperation between the locking/unlocking means **50** and the fourth drive means **C50**;
**g)** positioning transversely the support means **10** by cooperation between the positioning means **20** and the first drive means **C20;**
**h)** opening of the jaws **31_32** of the gripping/releasing means **30** by a cooperation between the gripping/releasing means **30** with the second drive means **C30.**

With reference to the above described sequence of operations, in order to selectively distribute the articles coming from a single entry row into two output rows, near the downstream portion of the operating path **P1,** the handling groups **G** may assume two different transverse placements, one on the left and one on the right.

In this context, said first drive means **C20** near the downstream portion of the manipulation path **P1** comprise a first terminal track **C20.2.a** and a second terminal track **C20.2.b,** in which said first terminal track **C20.2.a** and said second terminal track **C20.2.b** are mutually alongside and spaced apart, while said second drive means **C30** near the terminal portion of the operating path **P1** comprise a first longitudinal profile cam **C30.2.a** and a second longitudinal profile cam **C30.2.b,** wherein said first cam **C30.2.a** and said second cam **C30.2.b** are mutually alongside and spaced apart.

By this arrangement, when said handling group **G** moves from upstream to downstream with a transverse position set by said first terminal track **C20.2.a,** i.e. with the follower roller **21** within the first track **C20.2.a,** said gripping/releasing means **30** cooperate with said first longitudinal profile **C30.2.a** for opening/closing the jaws **31, 32** and, more particularly, the head 35 of the rod **33** finds the cam profile **C30.2.a.**

Again by means of this structure, when said handling group **G** moves upstream to a valley with a transverse position set by said second terminal track **C20.2.b,** i.e. with the roller **21** moving within the second track **C20.2.b,** said gripping/releasing means **30** cooperate with said second longitudinal profile **C30.2.b** for opening/closing the jaws **31, 32** and, more particularly, the head **35** follow the cam profile **C30.2.b.**

With reference to the foregoing, said locking/unlocking means **50** comprise a pad **51** carried radially movable with respect to the rotation axis **30y** of the gripping/releasing means **30** which is elastically pressed against the gripping/releasing means **30.**

In this context, when the group **G** moves from upstream to downstream along the path **P1,** said fourth drive means **C50** move said pad **51** in a detached position

with respect to the gripping means **30,** then holding said pad **51** in a detached position with respect to the gripping/releasing means **30** and subsequently providing and permitting said pad **51** to return to its initial position in which it presses against the gripping/releasing means **30.**

Referring to said fourth drive means **C50** they comprise a cam profile which, from upstream to downstream, comprises:
- a first longitudinal segment **C50.1** designed to move the pad 51 with respect to the gripping/releasing means **30** and thereby lock/unlock the rotation of the gripping/releasing means **30;**
- a second longitudinal segment **C50.2** able to keep away the pad **51** with respect to the release means **30** for a longitudinal segment of the operating path **P1** and thus allow rotation of the gripping/releasing means **30;**
- a third longitudinal segment **C50.3** able to approach the pad **51** against the gripping/releasing means **30** and thereby lock the rotation for the gripping/releasing means **30.**

With reference to the above description, when the gripping/releasing means **30** move along the second segment **C50.2** in which the pad **51** is detached with respect to the gripping/releasing means **30,** the rotating/non-rotating means **40** and the respective fourth drive means **C40** provide to rotate or not to rotate the gripping/releasing means **30** before that the follower roller 54 arrives by advancing in proximity to the profile **C50.3.**

Again with reference to the above description and with reference to the locking/unlocking means **50** in which, during the release phase, the flat face **51a** of the pad **51** is elastically brought to press against the flat face **36a** of the stop element **36** fixed to the gripping/releasing means **30.** As a consequence of said release, a face-to-face coupling **51a, 36a** is obtained, and the gripping/releasing means **30** will be taken to assume a particular and precise angular position defined by said face-to-face coupling **51a, 36a,** irrespective of the angular position obtained by the rotation or non-rotation previously performed by the rotating/non-rotating means **40.**

## Claims

1. System for handling articles which are transported from upstream to downstream along an operating path (P1), in which said system comprises:
a pair of chains (Ca, Cb), each chain being wound in closed loop on respective pairs of toothed sprockets (R1a, R2a, R1b, R2b), wherein said chains (Ca, Ca) support and move a plurality of pairs of support bars (B1, B2); wherein each pair of support bars supports and moves a respective handling unit (G) along a closed orbital path and along said operating path corresponding to the lower branch of said orbital path defined by the chains; wherein each handling unit includes operating means comprising supporting, positioning, gripping, rotating and locking means;
drive means comprising track and cam profile, said drive means being positioned along said operating path (P1) and are adapted to cooperate with said operating means during the movement of each handling unit along said operating path;
wherein each handling unit comprises:
supporting means (10) which are supported and transported along said operating path (P1);
positioning means (20);
gripping/releasing means (30) with jaws (31, 32) for gripping/releasing, wherein said gripping/releasing means (30) are supported in a rotary manner by said support means (10) and are adapted to grasp and release articles (P) to be handled;
rotating means (40), which are supported by said support means (10), and which are able to rotate the jaws (31, 32) of said gripping/releasing means (30);
locking/unlocking means (50), which are supported by said support means (10) and which are able to lock or unlock the rotation of the gripping/releasing means (30);
wherein said drive means comprise:
second drive means (C30), which are able to cooperate with said gripping/releasing means (30);
third drive means (C40), which are able to cooperate with said rotating means (40);
fourth drive means (C50), which are able to cooperate with said locking/unlocking means (50), **characterized in that** said positioning means (20) are supported by said supporting means (10) and are able to define the transverse position for said support means (10) during the translation of said support means (10) along the aforesaid operating path (P1); said drive means comprising first drive means (C20), which are able to cooperate with said positioning means (20);
wherein said locking/unlocking means (50) comprise a stop pad (51), which is supported radially movable with respect to the axis of rotation (30y) of the gripping/releasing means (30) and is elastically pushed against the gripping/releasing means (30); and
wherein said fourth drive means (C50) are able to move said buffer (51) in a detached position with respect to the gripping/releasing means (30), being able to maintain said pad (51) in said detached position with respect to said gripping/releasing means (30), and are able to allow said pad (51) to return to the position in which it is pushed against the gripping/releasing means (30).

2. System according to claim 1, **characterized by the fact that** during the translation movement of the handling unit (G) from upstream to downstream along the operating path (P1) the following operations are performed:
**a)** opening of the jaws (31, 32) of the gripping/releasing means (30) by a cooperation between the gripping/releasing means (30) and the second drive means (C.30);
**b)** positioning transversely of the supporting means (10) with the jaws (31, 32) open on the top of an article (P) to be handled by means of cooperation between the positioning means (20) and the first drive means (C20);
**c)** closing of the jaws (31, 32) of the gripping/releasing means (30) with consequent grasping of the article (P) to be handled by means of cooperation between the gripping/releasing means (30) and the second drive means (C30);
**d)** unlocking of the rotation for the gripping/releasing means (30) by cooperation between the locking/unlocking means (50) and the fourth drive means (C50);
**e)** maintaining unlocked the rotation for said gripping/releasing (30) by cooperation between the locking/unlocking means (50) and the fourth drive means (C50) and rotating or non-rotating of the gripping/releasing means (30) by means of cooperation between the rotating/non-rotating means (40) and said third drive means (C40);
**f)** locking of the rotation of the gripping/releasing (30) by cooperation between the locking/unlocking means (50) and the fourth drive means (C50);
**g)** positioning transversely the support means (10) by cooperation between the positioning means (20) and the first drive means (C20);
**h)** opening of the jaws (31, 32) of the gripping/releasing means (30) by cooperation between the gripping/releasing means (30) with the second drive means (C30).

3. System according to claim 1 or 2, **characterized in that**
- said first drive means (C20) in proximity of the downstream portion of the handling path (P1) comprise a first terminal track (C20.2.a) and a second terminal track (C20.2.b);
- said first terminal track (C20.2.a) and said second terminal track (C20.2.b) are positioned side by side and spaced apart transversally;
- said second drive means (C30) in the vicinity of the end portion of the operating path (P1) comprise a first longitudinal profile cam (C30.2.a) and a second longitudinal profile cam (C30.2.b);
- said first profile cam (C30.2.a) and said second profile cam (C30.2.b) are positioned side by side and spaced apart transversally;
- when said handling unit (G) moves from upstream to downstream with a transverse position set by said first terminal track (C20.2.a), said gripping/releasing means (30) cooperate with said first longitudinal profile (C30.2.a), for the opening/closing of the jaws (31, 32);
- when said handling unit (G) moves from upstream to downstream with a transverse position set by said second terminal track (C20.2.b) said gripping/releasing means (30) cooperate with said second longitudinal profile (C30.2.b) for opening/closing of the jaws (31, 32).

4. System according to claim 1, **characterized in that**
- said pad (51) comprises a flat abutment face (51a),
- said pad (51) is carried radially movable with respect to the rotation axis (30y) of the gripping/releasing means (30),
- said pad (51) is resiliently pressed with its flat face (51a) against a flat face (36a) of an abutment element (36) fixed to the rotating gripping/releasing means (30).

5. System according to claim 4, **characterized in that**
- the pad (51) is pressed against the abutment element (36) by a spring (52),
- said spring (52) is fitted on a control rod (53),
- said rod (53) is supported in axially sliding manner by said chassis (11),
- said rod (53) leads to a first end said pad (51) and at its opposite end a cam follower roller (54).

6. System according to any of the preceding claims, **characterized in that**
- said fourth drive means (C50) comprise a cam profile that extends from upstream to downstream and comprises:
- a first longitudinal segment (C50.1) able to outdistance the pad (51) with respect to the gripping/releasing means (30) and in this manner unlock the rotation for gripping/releasing (30);
- a second longitudinal segment (C50.2) able to keep distanced the pad (51) with respect to the gripping/releasing means (30) for a certain longitudinal segment of the operating path (P1) and in this manner allow the rotation of said gripping/releasing means (30);
- a third longitudinal segment (C50.3) able to bring the pad (51) against the gripping/releasing means (30) and in this manner lock the rotation for the gripping/releasing means (30).

7. System according to claim 6, **characterized by the fact** that when the gripping/releasing means (30) move along the second segment (C50.2) in which the pad (51) is detached with respect to the gripping/releasing means (30) the rotating means (40) and the related fourth control means (C50) rotate or non-rotate the gripping/releasing means (30).

8. System according to any of the preceding claims, **characterized in that** said locking/unlocking means (50) are positioned in a zone below the support means (10).

9. System according to any of the preceding claims, **characterized by the fact that** said fourth drive means (C50) are positioned along said operating path (P1) at a lower height (HP54) with respect to the height (Hca) in which move the chains (Ca, Cb).

## Patentansprüche

1. System zur Handhabung von Gegenständen, die entlang einer Arbeitsstrecke (P1) stromabwärts gefördert werden, umfassend:
- ein Paar von Ketten (Ca, Cb), von denen jede in einer Endlosschleife über entsprechende Paare gezahnter Kettenräder (R1a, R2a, R1b, R2b) läuft, wobei die Ketten (Ca, Cb) eine Anzahl von Tragstangenpaaren (B1, B2) halten und bewegen, von denen jedes eine zugeordnete Manipuliereinheit (G) trägt und auf einer geschlossenen Umlaufbahn auf der Arbeitsstrecke bewegt, die dem unteren Zweig der Umlaufbahn entspricht, die durch die Ketten definiert ist,
- wobei jede Manipuliereinheit Betätigungsmittel aufweist, die Tragmittel, Positioniermittel, Greifmittel, Drehmittel und Feststellmittel hat,
- wobei Antriebsmittel mit Spur- und Nockenprofil entlang der Arbeitsstrecke (P1) angeordnet sind und dazu dienen, während der Bewegung jeder Manipuliereinheit auf der Arbeitsstrecke mit den Betätigungsmitteln zusammenzuwirken,
- wobei jede Manipulereinheit umfasst:
- Tragmittel (10, die entlang der Arbeitsstrecke (P1) gehalten und vorwärts bewegt werden,
- Positioniermittel (20),
- Greif- und Freigabemittel (30) mit Klemmbacken (31, 32) zum Erfassen und Freigeben, die drehbar von den Tragmitteln (10) gehalten werden und geeignet sind, die zu manipulierenden Gegenstände (P) zu erfassen und freizugeben,
- Drehmittel (40), die an den Tragmittel (10) gelagert und so ausgebildet sind, dass sie die Klemmbacken (32, 32) der Greif- und Lösemittel (30) schwenken können,
- Feststell- und Lösemittel (50), die an den Tragmittel (10) angebracht und so ausgebildet sind, dass sie die Drehung der Greif- und Freigabemittel (30) feststellen oder lösen,
wobei die Antriebseinrichtung enthält:
- zweite Antriebsmittel (C30), die geeignet sind, mit den Greif- und Freigabemitteln (30) zusammenwirken,
- dritte Antriebsmittel (C40), die geeignet sind, mit den Drehmitteln (40) zusammenwirken,
- vierte Antriebsmittel (C50), die geeignet sind, mit den Feststell- und Lösemitteln (50) zusammenzuwirken,
**dadurch gekennzeichnet, dass** die Positioniermittel (20) an den Tragmitteln (10) gelagert und geeignet sind, die in Querrichtung verlaufende Stellung der Tragmittel (10) während ihrer Translation auf der Arbeitsstrecke (P1) zu bestimmen,
- wobei die Antriebseinrichtung erste Antriebsmittel (C20) hat und so ausgebildet ist, dass ein Zusammenwirken mit den Positioniermitteln (20) möglich ist,
- wobei die Feststell- und Lösemittel (50) einen Puffer (51) haben, der zur Dehachse (30y) der Greif- und Freigabemittel (30) radial beweglich gelagert ist und elastisch gegen die Greif- und Lösemittel (30) gedrückt wird,
- wobei die vierten Antriebsmittel (C50) so ausgebildet sind, dass sie den Puffer (51) in einer von den Greif- und Freigabemitteln (30) abgehobene Stellung zu bewegen und in dieser zu halten und geeignet sind, dem Puffer (51) eine Rückkehr in die Stellung zu ermöglichen, in der er gegen die Greif- und Freigabemittel (30) gedrückt wird.

2. System nach Anspruch 1, **dadurch gekennzeichnet, dass** während der Translation der Manipuliereinheit (G) auf der Arbeitsstrecke (P1) die nachstehenden Arbeitsschritte durchgeführt werden:
a) Öffnen der Klemmbacken (31, 32) der Greif- und Lösemittel (30) durch Zusammenwirken zwischen den Greif- und Lösemitteln (30) und den zweiten Antriebsmitteln (C20),
b) Querpositionierung der Tragmittel (10) mit den Klemmbacken (31, 32), die zur Oberseite eines Gegenstandes (P) geöffnet sind durch Zusammenwirken der Positioniermittel (20) mit den ersten Antriebsmitteln (C20),
c) Schließen der Klemmbacken (31) der Greif- und Lösemittel (30) und Erfassen des zu handhabenden Gegenstandes (P) durch Zusammenwirken der Greif- und Lösemittel (30) mit den zweiten Antriebsmitteln (C30),
d) Lösen der Drehbewegung der Greif- und Lösemittel (30) durch Zusammenwirken der Feststell- und Lösemittel (50) mit den vierten Antriebsmitteln (C50),
e) Beibehalten der gelösten Drehbewegung der Greif- und Lösemittel (30) durch Zusammenwirken zwischen den Feststell- und Lösemitteln (50) und den vierten Antriebsmitteln (C50) sowie Drehen oder Nichtdrehen der Greif- und Lösemittel (30) durch Zusammenwirken zwischen den Drehmitteln (40) und den dritten Antriebsmitteln (C40),
f) Feststellen der Drehbewegung der Greif- und Lösemittel (30) durch Zusammenwirken der Feststell- und Lösemittel (50) mit den vierten Antriebsmitteln (C50).
g) Querpositionierung der Tragmittel (10) durch Zusammenwirken der Positioniermittel (20) und der ersten Antriebsmittel (C20),
h) Öffnen der Klemmbacken (31, 32) der Greif- und Lösemittel (30) durch deren Zusammenwirken mit den zweiten Antriebsmitteln (20).

3. System nach Anspruch 1 oder 2, **dadurch gekennzeichnet, dass**
- die ersten Antriebsmittel (C20) in der Nähe des stromabwärtigen Abschnitts der Arbeitsstrecke (P) eine erste Endspur (C20.2.a) und eine zweite Endspur (C20.2.b) haben,
- die erste Endspur (C20.2.a) und die zweite Endspur (C20.2.b) mit Querabstand nebeneinanderliegen,
- die zweiten Antriebsmittel (C30) in der Nähe des Endabschnitts der Arbeitsstrecke (P1) ein erstes Längsnockenprofil (C30.2.a) und ein zweites Längsnockenprofil (C30.2.b) haben,
- das erste Nockenprofil (C30.2.a.) und das zweite Nockenprofil (C30.2.b) mit Querabstand nebeneinander liegen,
- bei stromabwärtiger Bewegung der Manipuliereinheit (G) in einer durch die erste Endspur (C20.2.a) vorgegebener Querrichtung die Greif- und Freigabemittel (30) zum Öffnen/Schließen der Klemmbacken (31, 32) mit dem erste Längsnockenprofil (C30.2.a.) zusammenwirken,
- bei stromabwärtiger Bewegung der Manipuliereinheit (G) in einer durch die zweite Endspur (C20.2.b) vorgegebenen Querrichtung die Greif- und Freigabemittel (30) zum Öffnen und Schließen der Klemmbacken (31, 32) mit dem zweiten Längsnockenprofil (C30.2.b) zusammenwirken.

4. System nach Anspruch 1, **dadurch gekennzeichnet, dass**
- der Puffer (51) eine erste flache Anschlagsfläche (51a) hat und zur Drehachse (30y) der Greif- und Lösemittel (30) radial beweglich gelagert ist
- und der Puffer (51) mit seiner flachen Anschlagfläche (51a) elastisch gegen eine flache Seite (36a) eines Anschlagelementes (36) gedrückt wird, das an den Greif- und Lösemitteln (30) befestigt ist.

5. System nach Anspruch 4, **dadurch gekennzeichnet, dass**
- der Puffer (51) gegen das Anschlagelement (36) durch eine Feder (52) gedrückt wird,
- die Feder (52) auf eine Steuerstange (53) aufgesetzt ist,
- die Steuerstange (53) durch das Gehäuse (11) axial verschiebbar gelagert ist,
- die Steuerstange (53) an einem ersten Ende den Puffer (51) und an einem gegenüberliegenden Ende eine Nockenfolgerolle (54) trägt.

6. System nach einem der vorhergehenden Ansprüche, **dadurch gekennzeichnet, dass** das vierte Antriebsmittel (C50) ein Nockenprofil hat, das sich in stromabwärtiger Richtung erstreckt und umfasst:
- ein erstes Längssegment (C50.1) zum Entfernen des Puffers (51) von den Greif- und Lösemitteln (30) und damit zur Freigabe der Rotation für die Greif- und Lösemittel (30),
- ein zweites Längssegment (C50.2), das den Puffer (51) über ein bestimmten Längssegment der Arbeitsstrecke (P1) von den Greif- und Lösemitteln (30) auf Abstand hält und damit deren Drehung ermöglicht.,
- ein drittes Längssegment (C50.3) zur Annäherung des Puffers (51) gegen die Greif- und Lösemittel (30) und damit zum Blockieren der Drehung der Greif- und Lösemittel (30).

7. System nach Anspruch 6, **dadurch gekennzeichnet, dass** dann, wenn sich die Greif- und Lösemittel (30) entlang des zweiten Segmentes (C50.2) bewegen und der Puffer (51) von den Greif- und Lösemitteln (30) wegbewegt wird, die Drehmittel (40) und die vierten Antriebsmittel (C50) eine Drehung/Nichtdrehung der Greif- und Lösemittel (30) bewirken.

8. System nach einem der vorhergehenden Ansprüche, **dadurch gekennzeichnet, dass** die Feststell- und Lösemittel (50) unterhalb der Tragmittel (10) liegen.

9. System nach einem der vorhergehenden Ansprüche, **dadurch gekennzeichnet, dass** die vierten Antriebsmittel (C50) entlang der Arbeitsstrecke (P1) in einer Höhe (HP 54) liegen, die kleiner als die Höhe (Hca) ist, in der sich die Ketten (Ca, Cb) bewegen.

## Revendications

1. Système de manutention d'objets, qui sont transportés en aval le long d'un parcours de travail (P1), comprenant :
- une paire de chaînes (Ca, Cb) dont chacune passe dans une boucle sans fin sur une paire correspondante de roues de chaînes dentées (R1a, R2a, R1b, R2b), sachant que les chaines (Ca, Cb) maintiennent et déplacent un nombre de paires de barres de support (B1, B2), dont chacune porte une unité de manipulation (G) attribuée et se déplace sur une trajectoire de circulation fermée sur le parcours de travail, qui correspond à la branche inférieure de la trajectoire de circulation, qui est définie par les chaînes,
- sachant que chaque unité de manutention comporte des moyens d'actionnement, qui possède des moyens de support, les moyens de positionnement, les moyens de préhension, les moyens de rotation et les moyens de blocage,
- sachant que des moyens d'entraînement avec un profilé de piste et à came sont disposés le long du parcours de travail (P1) et servent à agir conjointement avec les moyens d'actionnement pendant le déplacement de chaque unité de manutention sur le parcours de travail,
- sachant que chaque unité de manutention comprend :
- des moyens de support (10) qui sont maintenus le long du parcours de travail (P1) et sont déplacés en avant,
- des moyens de positionnement (20),
- des moyens de préhension et de libération (30) avec des mors de serrage (31, 32) pour saisir et libérer, qui sont maintenus pouvant tourner par les moyens de support (10) et sont adaptés pour saisir et libérer les objets à manipuler (P),
- des moyens de rotation (40), qui sont logés sur les moyens de supports (10) et sont constitués de telle manière qu'ils peuvent faire pivoter les mors de serrage (31, 32) des moyens de préhension et de déblocage (30),
- des moyens de blocage et de déblocage (50), qui sont montés sur les moyens de support (10) et sont constitués de telle manière qu'ils bloquent ou débloque la rotation des moyens de préhension et de libération (30),
sachant que le système d'entraînement contient :
- des deuxièmes moyens d'entraînement (C30), qui sont adaptés pour agir conjointement avec les moyens de préhension et de libération (30),
- des troisièmes moyens d'entraînement (C40), qui sont adaptés pour agir conjointement avec les moyens de rotation (40),
- des quatrièmes moyens d'entraînement (C50), qui sont adaptés pour agir conjointement avec les moyens de blocage et de déblocage (50),
**caractérisé en ce que** les moyens de positionnement (20) sont logés sur les moyens de support (10) et sont adaptés pour déterminer la position des moyens de transport (10) passant en direction transversale pendant leur translation sur le parcours de travail (P1),
- sachant que le système d'entraînement possède des premiers moyens d'entrainement (C20) et est constitué de telle manière qu'une action conjointe avec les moyens de positionnement (20) est possible,
- sachant que les moyens de blocage et de déblocage (50) possèdent un tampon (51) qui est logé radialement mobile par rapport à l'axe de rotation (30y) des moyens de préhension et de libération (30) et est appuyé de façon élastique contre les moyens de préhension et de déblocage (30),
- sachant que les quatrièmes moyens d'entraînement (C50) sont constitués de manière à déplacer le tampon (51) dans une position relevée des moyens de préhension et de libération (30) et à le maintenir dans celle-ci et sont adaptés pour permettre au tampon (51) un retour dans la position dans laquelle il est appuyé contre les moyens de préhension et de libération (30).

2. Système selon la revendication 1, **caractérisé en ce que** pendant la translation de l'unité de manipulation (G) sur le parcours de travail (P1), les étapes de travail suivantes sont effectuées :
a) ouverture des mors de serrage (31, 32) des moyens de préhension et de déblocage (30) par action conjointe entre les moyens de préhension et de déblocage (30) et les deuxièmes moyens d'entraînement (C20),
b) positionnement transversal des moyens de support (10) avec les mors de serrage (31, 32), qui sont ouverts vers la face supérieure d'un objet (P) par action conjointe des moyens de positionnement (20) avec les premiers moyens d'entraînement (C20),
c) fermeture des mors de serrage (31) des moyens de préhension et de déblocage (30) et saisie de l'objet (P) à manipuler par action conjointe des moyens de préhension et de déblocage (30) et des deuxièmes moyens d'entraînement (C30),
d) déblocage du mouvement de rotation des moyens de préhension et de déblocage (30) par action conjointe des moyens de blocage et de déblocage (50) avec les quatrièmes moyens d'entraînement (C50),
e) maintien du mouvement de rotation débloqué des moyens de préhension et de déblocage (30) par action conjointe entre les moyens de blocage et de déblocage (50) et les quatrièmes moyens d'entraînement (C50) ainsi que rotation ou non rotation des moyens de préhension et de déblocage (30) par action conjointe entre les moyens de rotation (40) et les troisièmes moyens d'entraînement (C40),
f) blocage du mouvement de rotation des moyens de préhension et de déblocage (30) par action conjointe des moyens de blocage et de déblocage (50) avec les quatrièmes moyens d'entraînement (C50),
g) positionnement transversal des moyens de support (10) par action conjointe des moyens de positionnement (20) et des premiers moyens d'entraînement (C20),
h) ouverture des mors de serrage (31, 32) des moyens de préhension et de déblocage (30) par action conjointe de ceux-ci avec les deuxièmes moyens d'entraînement (20).

3. Système selon la revendication 1 ou 2, **caractérisé en ce que**
- les premiers moyens d'entraînement (C20) possèdent à proximité de la section en aval du parcours de travail (P), une première piste finale (C20.2.a) et une deuxième piste finale (C20.2.b),
- la première piste finale (C20.2.a) et la deuxième piste finale (C20.2.b) sont situées l'une à côté de l'autre à distance transversale,
- les deuxièmes moyens d'entraînement (C30) possèdent à proximité de la section finale du parcours de travail (P1) un premier profilé à came longitudinal (C30.2.a) et un deuxième profilé à came longitudinal (C30.2.b),
- le premier profilé à came (C30.2.a) et le deuxième profilé à came (C30.2.b) sont situés l'un à côté de l'autre à distance transversale,
- lors du déplacement en aval de l'unité de manutention (G) dans une direction transversale prédéfinie par la première piste finale (C20.2.a), les moyens de préhension et de libération (30) agissent conjointement pour ouvrir/fermer les mors de serrage (31, 32) avec le premier profilé à came longitudinal (C30.2.a),
- lors du déplacement en aval de l'unité de manutention (G) dans une direction transversale prédéfinie par la deuxième piste finale (C20.2.b), les moyens de préhension et de libération (30) agissent conjointement pour ouvrir et fermer les mors de serrage (31, 32) avec le deuxième profilé à came longitudinal (C30.2.b).

4. Système selon la revendication 1, **caractérisé en ce que**
- le tampon (51) possède une première surface de butée plate (51a) et est logé radialement mobile par rapport à l'axe de rotation (30y) des moyens de préhension et de déblocage (30),
- et le tampon (51) est appuyé avec sa surface de butée plate (51a) de façon élastique contre une face plate (36a) d'un élément de butée (36), qui est fixé sur les moyens de préhension et de déblocage (30).

5. Système selon la revendication 4, **caractérisé en ce que**
- le tampon (51) est appuyé contre l'élément de butée (36) par un ressort (52),
- le ressort (52) est posé sur une tige de commande (53),
- la tige de commande (53) est logée pouvant être axialement déplacée à travers le boîtier (11),
- la tige de commande (53) porte à une première extrémité le tampon (51) et à une extrémité opposée un galet suiveur de came (54).

6. Système selon l'une quelconque des revendications précédentes, **caractérisé en ce que** le quatrième moyen d'entraînement (C50) possède un profilé à came, qui s'étend en direction avale et comprend :
- un premier segment longitudinal (C50.1) pour éloigner le tampon (51) des moyens de préhension et de déblocage (30) et de ce fait pour la libération de la rotation pour les moyens de préhension et de déblocage (30),
- un deuxième segment longitudinal (C50.2), qui maintient le tampon (51) sur un certain segment longitudinal déterminé du parcours de travail (P1) à distance des moyens de préhension et de déblocage (30) et permet de ce fait leur rotation,
- un troisième segment longitudinal (C50.3) pour approcher le tampon (51) contre les moyens de préhension et de déblocage (30) et bloquer de ce fait la rotation des moyens de préhension et de déblocage (30).

7. Système selon la revendication 6, **caractérisé en ce qu'**ensuite lorsque les moyens de préhension et de déblocage (30) se déplacent le long du deuxième segment (C50.2) et le tampon (51) est éloigné des moyens de préhension et de libération (30), les moyens de rotation (40) et les quatrièmes moyens d'entraînement (C50) causent une rotation/non rotation des moyens de préhension et de déblocage (30).

8. Système selon l'une quelconque des revendications précédentes, **caractérisé en ce que** les moyens de blocage et déblocage (50) se situent en dessous des moyens de support (10).

9. Système selon l'une quelconque des revendications précédentes, **caractérisé en ce que** les quatrièmes moyens d'entraînement (C50) se situent le long du parcours de travail (P1) à une hauteur (HP 54), qui est plus petite que la hauteur (Hca) dans laquelle se déplacent les chaînes (Ca, Cb).
